# EUROPEAN PATENT SPECIFICATION

(11) **EP 4 311 930 B1**
(45) Date of publication and mention of the grant of the patent: **07.10.2026**
(21) Application number: 22187884.6
(22) Date of filing: 29.07.2022
(51) Int. Cl.: F03D 1/06

(54) **FIRST BLADE SEGMENT FOR A SEGMENTED WIND TURBINE ROTOR BLADE**
ERSTES SCHAUFELSEGMENT FÜR EINE SEGMENTIERTE WINDTURBINENROTORSCHAUFEL
PREMIER SEGMENT DE PALE POUR UNE PALE DE ROTOR D'ÉOLIENNE SEGMENTÉE

(43) Date of publication of application: 31.01.2024
(73) Proprietor: LM Wind Power A/S, 6000 Kolding (DK)
(72) Inventor: Merzhaeuser, Thomas, 48499 Salzbergen (DE)
(74) Representative: Zimmermann & Partner Patentanwälte mbB

(56) References cited:
- EP-A2- 2 778 393
- WO-A1-2020/086080
- WO-A1-2020/131067
- WO-A1-2021/008666
- WO-A1-2021/219198
- US-A1- 2015 132 137

## Description

### FIELD

The present disclosure relates generally to wind turbines, and more particularly to a first blade segment for a segmented wind turbine rotor blade, to a wind turbine rotor blade, and to a method of producing a first blade segment.

### BACKGROUND

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

The size of rotor blades contributes to the energy efficiency of wind turbines. In particular, an increase in rotor blade size can increase the energy production of a wind turbine. The economic benefits of increased wind turbine sizes or rotor blade sizes must be weighed against respective costs of manufacturing, transporting, assembly or repair of the wind turbines. One strategy for reducing the costs of preforming, transporting, and erecting wind turbines having rotor blades of increasing sizes is to manufacture the rotor blades in blade segments. The blade segments may be assembled and connected at a joint to form a full rotor blade. Assembly and joining of the blade segments may be performed after, for example, the individual blade segments are transported to an erection location.

US 2015/132137 A1 relates to the assembly of sections of structural components for wind turbine blades. Sections each include an extrados skin and an intrados skin and a longitudinal bearing structure provided with sole pieces. Sole pieces are made, in particular, from axial folds of composite materials and are reinforced at the level of the terminations by biaxial folds in order to obtain a stack suitable for absorbing the forces of fasteners. WO 2021/008666 A1 relates to a connection for a split wind turbine blade. WO 2020/131067 A1 relates to a jointed wind turbine rotor blade having a spar cap constructed of varying forms of materials along its span.

However, the joint between blade segments needs to withstand high loads experienced by the rotor blade. Further, the available space for the joint components and structural components of the blade within the aerodynamic shape of the rotor blade is limited.

Accordingly, the present disclosure is directed to a first blade segment for a segmented wind turbine rotor blade that can provide a robust, safe and/or compact connection to a second blade segment of the wind turbine rotor blade.

### BRIEF DESCRIPTION

Aspects and advantages of the invention will be set forth in part in the following description, or may be obvious from the description, or may be learned through practice of the invention.

In one aspect, the present disclosure is directed to a first blade segment for a segmented wind turbine rotor blade according to independent claim 1. A first blade segment for a segmented wind turbine rotor blade includes a spar cap. The spar cap includes at least a first spanwise region and a second spanwise region. The first blade segment further includes a load transfer laminate being arranged in the second spanwise region of the spar cap. The load transfer laminate includes fibers, wherein less than 80% of the fibers are oriented in a spanwise direction of the first blade segment. The first blade segment includes an inner shell and an outer shell, the load transfer laminate being arranged between the spar cap and at least one of: the inner shell and the outer shell; wherein the inner shell, the outer shell and the load transfer laminate are formed by infusion of fiber material in a blade segment mold. It should be understood that the first blade segment may further include any of the features as described herein.

In another aspect, the present disclosure is directed to a segmented wind turbine rotor blade including a first blade segment according to embodiments described herein.

In yet another aspect, the present disclosure is directed to a method of producing a first blade segment for a segmented wind turbine rotor blade according to the independent method claim. A method of producing a first blade segment for a segmented wind turbine rotor blade includes arranging a component assembly in a blade segment mold. Arranging the component assembly includes arranging outer shell fiber material for an outer shell in the blade segment mold. Arranging the component assembly includes arranging a spar cap in the blade segment mold, the spar cap including at least a first spanwise region and a second spanwise region. Arranging the component assembly includes arranging load transfer laminate material in the second spanwise region of the spar cap, wherein the load transfer laminate material is arranged such that less than 80% of fibers of the load transfer laminate material are oriented in a spanwise direction. Arranging the component assembly includes arranging inner shell fiber material for the inner shell over the spar cap. The method further includes, after arranging the component assembly, infusing the component assembly with an infusion material, wherein infusing the component assembly provides an outer shell of the first blade segment from the outer shell fiber material, a load transfer laminate of the first blade segment from the load transfer laminate material, and an inner shell of the first blade segment from the inner shell fiber material, the load transfer laminate being arranged between the spar cap and at least one of: the inner shell and the outer shell. It should be understood that the method may further include any of the additional operations and/or features as described herein.

These and other features, aspects and advantages of the present invention will be further supported and described with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of a wind turbine;
FIG. 2 illustrates a schematic view of a segmented rotor blade of a wind turbine;
FIG. 3 illustrates a sectional view of a rotor blade;
FIGS. 4A-B illustrate schematic sectional views of a first blade segment according to an exemplary embodiment and of a second blade segment for assembling a wind turbine rotor blade;
FIG. 5 illustrates a schematic sectional view of a portion of a first blade segment according to some embodiments of the disclosure;
FIG. 6 illustrates a schematic sectional view of a portion of a first blade segment according to further embodiments;
FIG. 7 shows a flow diagram of a method of producing a first blade segment according to embodiments; and
FIG. 8A-E illustrates various operations of producing a first blade segment according to embodiments.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

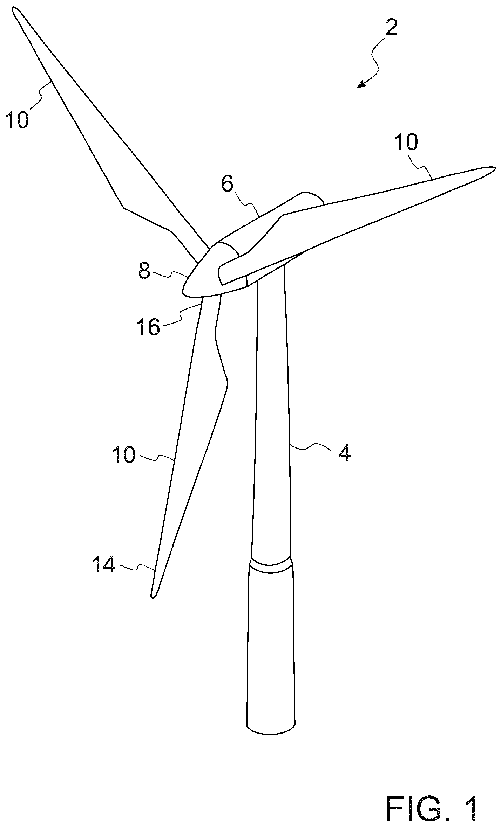

FIG. 1 illustrates a modern upwind wind turbine 2 with a tower 4, a nacelle 6 and a rotor with a substantially horizontal rotor shaft. The rotor includes a hub 8 and at least one rotor blade 10 extending radially from the hub 8, each blade 10 having a blade root 16 nearest the hub 8 and a blade tip 14 furthest from the hub 8. For example, as shown in FIG. 1, the rotor may include three rotor blades 10.

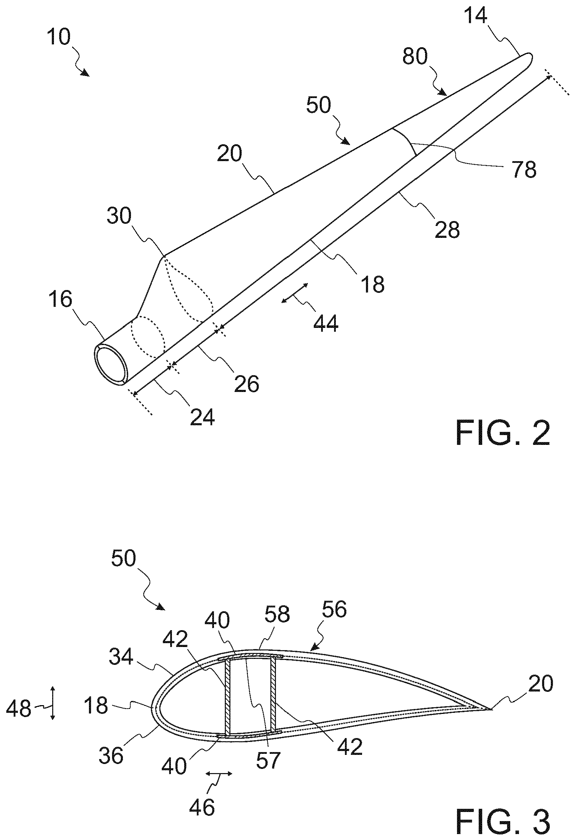

Fig. 2 shows a schematic view of a wind turbine blade 10. In a spanwise direction 44 of the blade 10, the blade 10 includes a root region 24 closest to the hub, an airfoil region 28 furthest away from the hub 8 and a transition region 26 between the root region 24 and the airfoil region 28. The blade 10 includes a leading edge 18 facing the direction of rotation of the blade 10, when the blade 10 is mounted to the hub, and a trailing edge 20 facing the opposite direction of the leading edge 18.

The airfoil region 28 (or profiled region) has a blade shape configured for generating lift, whereas the root region 24 due to structural considerations has a substantially circular or elliptical cross-section, which for instance makes it easier and safer to mount the blade 10 to the hub 8. The diameter (or the chord) of the root region 24 may be essentially constant along the entire root region 24. The transition region 26 has a transitional profile gradually changing from the circular or elliptical shape of the root region 24 to the airfoil profile of the airfoil region 28. The chord length of the transition region 26 typically increases with increasing distance from the hub 8. The airfoil region 28 has an airfoil profile with a chord extending between the leading edge 18 and the trailing edge 20 of the blade 10. The width of the chord decreases with increasing distance from the hub 8. A shoulder 30 of the blade 10 is defined as the position, where the blade 10 has its largest chord length. The shoulder 30 is typically provided at the boundary between the transition region 26 and the airfoil region 28.

According to embodiments of the present disclosure, a wind turbine rotor blade 10 includes at least two blade segments, particularly exactly two. For example, FIG. 2 illustrates a first blade segment 50 and a second blade segment 80 being joined at a split line 78 of the rotor blade. In some embodiments, the rotor blade 10 can include more than two blade segments, for example exactly three blade segments or exactly four blade segments. The at least two blade segments include a first blade segment 50 and a second blade segment 80. The second blade segment 80 can be joined to the first blade segment 50 such that the second blade segment 80 extends from the first blade segment 50 towards a blade tip 14 of the rotor blade 10. The rotor blade 10 can extend along a blade axis in spanwise direction 44 from the blade root 16 of the rotor blade 10 to the blade tip 14 of the rotor blade 10. Some embodiments of the present disclosure may be directed to a rotor blade 10 including a first blade segment 50 and a second blade segment 80. Embodiments may be directed to a set of at least two blade segments for assembling a rotor blade 10, the set including a first blade segment 50 and a second blade segment 80 according to embodiments described herein.

In embodiments, the first blade segment 50 is a root segment of the rotor blade 10. In particular, the first blade segment 50 can include the blade root 16 of the rotor blade 10. In embodiments, the first blade segment 50 is connected or is configured to be connected to the rotor hub 8. For example, the blade root 16 can be configured to be connected to a pitch bearing of the rotor hub 8. In further embodiments, the first blade segment may be j oined in a direction towards the root to a root-side blade segment and in a direction towards the blade tip to the second blade segment.

In some embodiments, the second blade segment 80 is a tip segment including the blade tip 14. For example, FIG.2 illustrates a second blade segment 80 as a tip segment being joined to a first blade segment 50, the first blade segment 50 being a root segment configured to be joined to a rotor hub 8. In further embodiments, the second blade segment 80 may be an intermediate blade segment extending between the first blade segment and an additional blade segment, the additional blade segment being connectable to the second blade segment at the opposite end of the first blade segment.

During operation of the wind turbine 2, the rotor blades 10 experience high loads. In particular, an outer segment such as the second blade segment 80 may be subject to high speeds and high forces from the wind acting on the blade segment. Forces acting on the second blade segment 80 as well as counter-forces from the first blade segment 50 may be transmitted between the first blade segment 50 and the second blade segment 80 at the joint between the blade segments. A joint region of the blade segments around the joint may be designed to provide stability to withstand the transmission of such loads between the blade segments. However, the design of the joint region may further involve considerations concerning the limited available space within the aerodynamic shape of the rotor blade 10, the size and weight of joint components of the joint, and/or considerations regarding a complexity of the joint or of an assembly procedure of assembling the blade segments to a full rotor blade 10. As such, the present disclosure is directed to a first blade segment that can provide or support a robust, safe and/or compact connection to a second blade segment.

According to embodiments of the present disclosure, the first blade segment 50 includes a spar cap 40. In particular, the first blade segment 50 may include two spar caps 40. The spar caps 40 may extend in a spanwise direction 44 of the first blade segment 50. The spar caps 40 may be arranged on opposite sides of the first blade segment 50. One of the spar caps 40 may be arranged along a pressure side of the first blade segment 50. The other one of the spar caps 40 may be arranged along the suction side of the first blade segment 50. **In** embodiments, the spar caps 40 may be connected to one or more shear webs 42 of the first blade segment 50. The shear webs 42 may extend along the spanwise direction 44 and between the spar caps 40 in flapwise direction 48.

For example, FIG. 3 schematically illustrates a cross-section of the first blade segment 50, for example in the airfoil region 28 of the blade 10 and particularly in a first spanwise region 52 of the spar cap 40 according to embodiments described herein. The first blade segment 50 includes a blade shell 56 formed by a first shell half 34 bonded with a second shell half 36 of the first blade segment 50. Each of the first shell half 34 and the second shell half 36 provide an outer skin of the first blade segment 50 between the leading edge 18 and the trailing edge 20 of the first blade segment 50. The first blade segment 50 includes a spar extending along a spanwise direction 44 of the first blade segment 50. The spar includes spar caps 40 and shear webs 42. Each of the shear webs 42 can be connected to both spar caps 40, particularly connecting the spar caps 40 in a flapwise direction 48.

According to some embodiments, a spar cap 40 of the first blade segment 50 is formed via pultrusion. The spar cap 40 may include spar cap fibers, particularly carbon fibers and/or glass fibers. **In** some embodiments, more than 80% of the spar cap fibers, particularly more than 85% or more than 90% of the spar cap fibers, may be oriented in the spanwise direction 44. For example, approximately 95% of the spar cap fibers may be oriented in the spanwise direction 44. The spar cap 40 may particularly be configured to support loads in a spanwise direction 44.

According to embodiments, the first blade segment 50 includes a blade shell 56. **In** embodiments, the first blade segment 50 includes an inner shell 57 and an outer shell 58. The outer shell 58 may face an outside of the first blade segment 50. The inner shell 57 may face an inside of the first blade segment 50. **In** embodiments, a spar cap 40 of the first blade segment 50 is arranged between the inner shell 57 and the outer shell 58. For example, FIG. 3 illustrates each of the spar caps 40 arranged between an inner shell 57 and an outer shell 58 of the blade shell 56.

**In** embodiments, the first blade segment 50 includes a load transfer laminate 64. **In** embodiments, the load transfer laminate 64 is arranged between the spar cap 40 and at least one of the inner shell 57 and the outer shell 58. For example, the load transfer laminate 64 may be arranged between the spar cap 40 of the first blade segment 50 and the inner shell 57. **In** further embodiments, the load transfer laminate 64 is arranged between the spar cap 40 and the outer shell 58. **In** some embodiments, the load transfer laminate 64 may be arranged between the spar cap 40 and the outer shell 58, and between the spar cap 40 and the inner shell 57. **In** particular, a portion of the load transfer laminate 64 may be arranged between the spar cap 40 and the outer shell 58, and another portion of the load transfer laminate 64 between the spar cap 40 and the inner shell 57. **In** some embodiments, the load transfer laminate 64 may be arranged in contact with the spar cap 40.

According to embodiments, the spar cap 40 includes at least a first spanwise region 52 and a second spanwise region 54. The first spanwise region 52 and the second spanwise region 54 may be different spanwise regions. **In** particular, the first spanwise region 52 and the second spanwise region 54 may be adjoining spanwise regions or disjoint spanwise regions. **In** particular, the second spanwise region 54 may be smaller than the first spanwise region 52. **In** embodiments, the load transfer laminate 64 is arranged in the second spanwise region 54. **In** some embodiments, the load transfer laminate 64 may not extend from the second spanwise region 54 into the first spanwise region 52. The load transfer laminate 64 may be arranged fully within the second spanwise region 54 of the spar cap 40.

According to some embodiments, the second spanwise region 54 of the spar cap 40 includes a tip-side end of the spar cap 40. The first spanwise region 52 may be arranged towards the blade root 16 with respect to the second spanwise region 54. In embodiments, the second spanwise region 54 can include less than 25% of a spanwise length of the spar cap 40, particularly less than 20% or less than 15%.

In embodiments, the first blade segment 50 includes a receiver 66 for receiving a connecting member 82 of a second blade segment 80 of the segmented wind turbine rotor blade 10. The receiver 66 can be arranged at a tip-side end of the spar cap 40 or of the first blade segment 50. In some embodiments, the receiver 66 may be at least partially arranged in the second spanwise region 54 of the spar cap 40. In further embodiments, the receiver 66 can be fully arranged within the second spanwise region 54. For example, the second spanwise region can include the spanwise region of the receiver 66 and further include a length of up to 50% of the spanwise receiver length towards the blade root 16, particularly up to 30% of the receiver length or up to 20% of the receiver length.

In embodiments, the receiver 66 can be configured for receiving a connecting member 82 in a receiving space 72 of the receiver 66. The receiving space 72 may extend in spanwise direction 44 towards the blade root 16 up to a receiver bulkhead 74 of the receiver 66. The connecting member 82 of the second blade segment 80 may be configured for example as a beam. The connecting member 82 may extend further towards the blade root 16 of the rotor blade 10 than a second blade shell 81 of the second blade segment 80. The connecting member 82 of the second blade segment 80 may include one or more structural members of the second blade segment 80, such as a spar or one or more spar caps of the second blade segment 80. In some embodiments, the receiver 66 and the connecting member 82 are configured to be joined via an interlocking device, e.g. via a pin joint. For example, each of the receiver 66 and the connecting member 82 can include at least one pinhole for insertion of a pin 70. The pin 70 may be inserted into the at least one pinhole and at least partially through the receiver 66 and the connecting member 82.

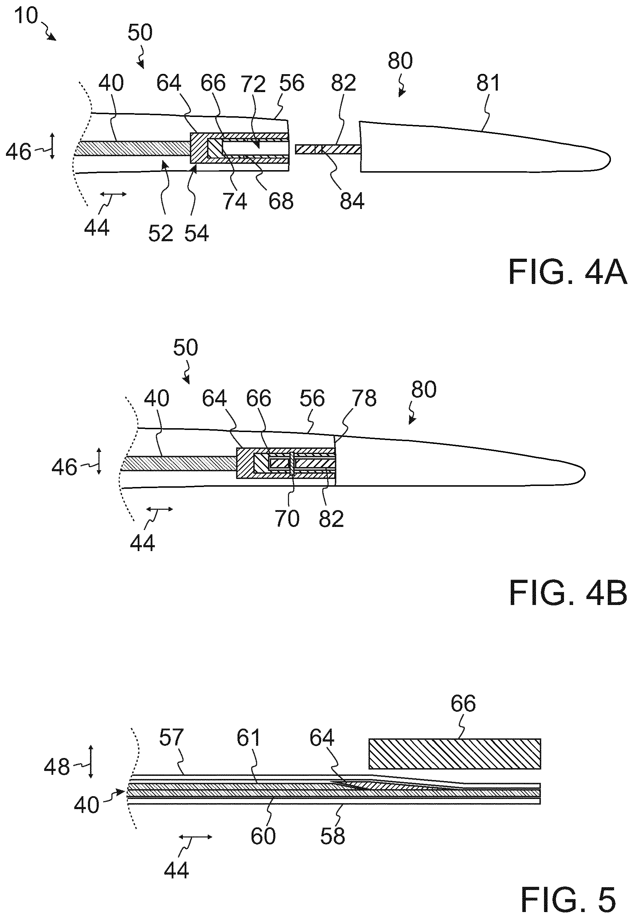

For example, FIGS. 4A and 4B schematically illustrate a first blade segment 50 and a second blade segment 80 of a wind turbine rotor blade 10. In FIG. 4A, the first blade segment 50 and the second blade segment 80 are shown in a separated state, in FIG. 4B in a joined state. The first blade segment 50 includes a spar cap 40 extending in spanwise direction 44 of the first blade segment 50 up to the tip-side end of the first blade segment 50. A receiver 66 is arranged at the tip-side end of the spar cap 40, particularly in a second spanwise region 54 of the spar cap 40. In the exemplary embodiment of FIGS. 4A and 4B, a load transfer laminate 64 is arranged between the spar cap 40 and the receiver 66, and more particularly between the spar cap 40 and an inner shell (not shown) of the first blade segment 50. As illustrated in FIG. 4A, the receiver 66 includes a receiving space 72 for receiving a connecting member 82 of the second blade segment 80. In FIG. 4B, the connecting member 82 is inserted in spanwise direction 44 into the receiver 66, e.g. up to a receiver bulkhead 74 of the receiver 66. A pin 70 is inserted through receiver pinholes 68 and a connecting member pinhole 84 to mechanically interlock the first blade segment 50 and the second blades segment 80. In embodiments, the load transfer laminate 64 is particularly configured for transferring loads between the receiver 66, the spar cap 40 and/or the blade shell 56 of the first blade segment 50. For example, the load transfer laminate 64 can transfer loads and forces acting on the second blade segment 80 and which are transmitted to the receiver 66 via the connecting member 82.

According to embodiments, the load transfer laminate 64 includes fibers, wherein less than 80% of the fibers, particularly less than 75% of the fibers or more particularly less than 70%, are oriented in a spanwise direction 44 of the first blade segment 50. In some embodiments, more than 50% of the fibers, particularly more than 60%, are oriented in a spanwise direction 44 of the first blade segment 50. For example, between 50% and 80% of the fibers may be oriented in a spanwise direction 44. In particular, the load transfer laminate 64 may be configured for transferring spanwise and torsional loads between the receiver 66, the spar cap 40 and/or the blade shell 56.

An orientation of the fibers in spanwise direction 44 of the first blade segment 50 may be at least essentially parallel to a longitudinal blade axis or span of the first blade segment 50, e.g. deviating from a parallel orientation by maximum 10 degrees or maximum 5 degrees. It should be understood that the longitudinal blade axis or span may follow the curvature of the first blade segment 50 or of the rotor blade 10.

According to some embodiments, a chordwise width of the load transfer laminate 64 in chordwise direction 46 is larger than a chordwise receiver width of the receiver 66. For example, the chordwise width of the load transfer laminate 64 in chordwise direction 46 of the first blade segment 50 may be at least 1.1 times larger than the chordwise receiver width, particularly at least 1.2 times larger.

According to some embodiments, the load transfer laminate 64 may extend in the spanwise direction 44 further towards the blade root 16 than the receiver 66. In embodiments, a spanwise length of the load transfer laminate 64 is larger than a spanwise receiver length of the receiver 66, e.g. as illustrated in FIG. 4A. In further embodiments, the spanwise length of the load transfer laminate 64 is smaller than a spanwise receiver length of the receiver 66. In some embodiments, the chordwise width of the load transfer laminate 64 is larger than a chordwise spar cap width of the spar cap 40. The load transfer laminate may particularly provide a load distribution between the receiver 66, the spar cap 40 and/or the blade shell 56.

According to some embodiments, the spar cap 40 has a first spar cap flapwise thickness in the first spanwise region 52 and a second spar cap flapwise thickness in the second spanwise region 54, wherein the first spar cap flapwise thickness is larger than the second spar cap flapwise thickness. In particular, the first spar cap flapwise thickness may be a maximum spar cap flapwise thickness of the spar cap 40. The second spar cap flapwise thickness may be a minimum spar cap flapwise thickness of the spar cap 40. For example, the spar cap 40 may have two or more spar cap layers, particularly layers formed via pultrusion. The number of spar cap layers may decrease in the spanwise direction 44 from a root-side of the spar cap 40 to the tip-side of the spar cap 40. In embodiments, the spar cap 40 may have a maximum number of spar cap layers in the first spanwise region 52 and a reduced number of spar cap layers in the second spanwise region 54. A reduced number of spar cap layers can particularly provide more space in flapwise direction 48 for the receiver 66.

In embodiments, the fibers of the load transfer laminate 64, of the inner shell 57 and/or of the outer shell 58 are provided by fiber material. In embodiments, the inner shell 57, the outer shell 58 and the load transfer laminate 64 are formed by infusion of the fiber material in a blade segment mold 92. The fiber material may be infused with an infusion material such as a resin. The blade segment mold 92 may be configured for forming at least a portion of the first blade segment 50, e.g. a first half or a second half of the first blade segment 50.

In some embodiments, the fiber material may include sheets of fiber fabric. In particular, fiber fabric may be unidirectional fiber fabric or biaxial fiber fabric. In unidirectional fiber fabric, at least 90%, particularly at least 95% or more particularly 100%, of the fibers are directed essentially in the same direction. In biaxial fiber fabric, a portion of fibers is directed along a first axis, and a second portion of fibers is directed along a second axis different from the first axis. For example, half of the fibers in biaxial fiber fabric may be arranged perpendicularly to the other half of the fibers. A plurality of sheets of fiber fabric may be arranged in the blade segment mold for forming an inner shell 57, an outer shell 58 and/or the load transfer laminate 64. Subsequently, the sheets fiber fabric may be infused with the infusion material.

In embodiments, each of the inner shell 57, the outer shell 58 and/or the load transfer laminate 64 include one or more fabric layers. Each fabric layer may include an infused sheet of fiber fabric. In particular, a fabric layer may be a unidirectional fabric layer including an infused sheet of unidirectional fiber fabric. A fabric layer may be a biaxial fabric layer including an infused sheet of biaxial fiber fabric.

According to some embodiments, the load transfer laminate 64 includes a plurality of fabric layers. The fabric layers include the fibers of the load transfer laminate 64. In embodiments, the load transfer laminate 64 includes one or more biaxial fabric layers, particularly a plurality of biaxial fabric layers. One or more biaxial fabric layers may be provided such that the fibers extend at approximately plus minus 45 degrees with respect to the spanwise direction 44. In some embodiments, the load transfer laminate 64 includes one or more unidirectional fabric layers. One or more unidirectional fabric layers may be provided such that the fibers extend in the spanwise direction 44.

According to embodiments, the fabric layers include at least one first layer with fibers oriented in one or more first directions, and at least one second layer with fibers oriented in one or more second directions different from the one or more first directions. In particular, the load transfer laminate 64 may include a plurality of biaxial fabric layers and at least one unidirectional fabric layer. In some embodiments, a number of the biaxial fabric layers is at least 2 times, particularly at least 4 times, a number of unidirectional fiber fabric layers. In embodiments, the fabric layers of the load transfer laminate 64 can include one or more glass fiber fabric layers and/or one or more carbon fiber fabric layers. Arranging fibers along the spanwise direction and oblique to the spanwise direction may particularly provide support with respect to spanwise and torsional loads.

**In** embodiments, the load transfer laminate 64 has a flapwise thickness. The flapwise thickness can be non-uniform in the spanwise direction 44. **In** particular, a number of fabric layers of the load transfer laminate 64 may change in the spanwise direction 44. The load transfer laminate 64 may have a maximum flapwise thickness in the second spanwise region 54. In some embodiments, the flapwise thickness of the load transfer laminate 64 tapers from the maximum flapwise thickness in at least one spanwise direction 44, particularly in both spanwise directions 44.

According to embodiments, the load transfer laminate 64 is at least partially co-localized in the spanwise direction 44 with the receiver 66. **In** some embodiments, a maximum flapwise thickness may be provided at the spanwise position of the receiver bulkhead 74 or in a spanwise receiver bulkhead region. A spanwise receiver bulkhead region may include the spanwise position of the receiver bulkhead 74 and 10% of a spanwise receiver length in both spanwise directions.

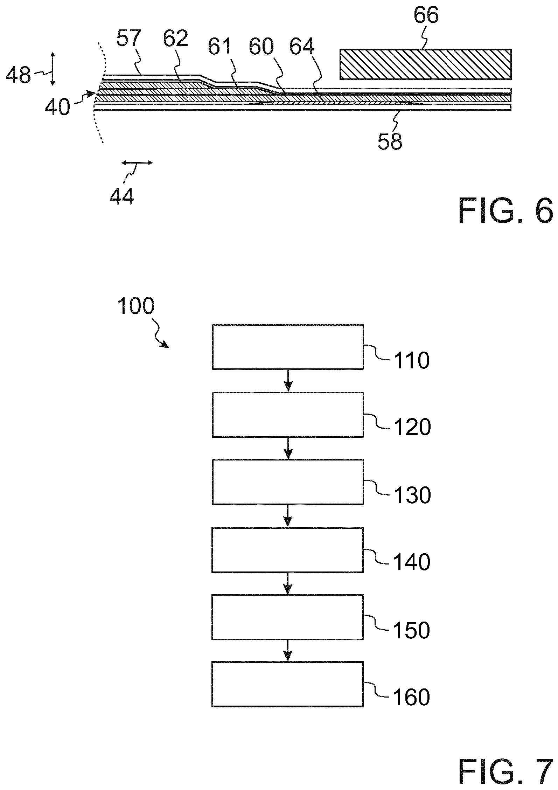

FIGS. 5 and 6 illustrate schematic sectional views of exemplary embodiments. FIGS. 5 and 6 each illustrate a tip-side end of the first blade segment 50 with a receiver 66 arranged at the tip-side end, wherein only one spar cap 40, one load transfer laminate 64 and one side of the shell are illustrated, whereas the opposite side of the first blade segment 50 is omitted in the schematic illustration. Referring to FIG. 5, the first blade segment 50 includes a spar cap 40 with a first spar cap layer 60 and a second spar cap layer 61 formed by pultrusion. The first spar cap layer 60 extends in spanwise direction 44 to the tip-side end of the first blade segment 50. The second spar cap layer 61 extends in spanwise direction 44 approximately up to the receiver 66. The spar cap 40 is arranged between an inner shell 57 and an outer shell 58. The first blade segment 50 further includes a load transfer laminate 64, which in FIG. 5 is arranged between the spar cap 40 and the inner shell 57. The load transfer laminate 64 has a maximum flapwise thickness in flapwise direction 48, which is co-localized with a root-side end of the receiver 66. The flapwise thickness of the load transfer laminate 64 tapers from the maximum flapwise thickness in both spanwise directions 44.

**In** FIG. 6, the spar cap 40 includes for example a first spar cap layer 60, a second spar cap layer 61 and a third spar cap layer 62. The number of layers of the spar cap 40 decreases towards the tip-side end of the spar cap 40. FIG. 6 further illustrates a load transfer laminate 64 arranged between the spar cap 40 and the outer shell 58 of the first blade segment 50. The load transfer laminate 64 has a maximum flapwise thickness that is constant in spanwise direction 44 in a region around the root-side end of the receiver 66. The flapwise thickness tapers from the maximum flapwise thickness in both spanwise directions 44.

According to some embodiments, the load transfer laminate is formed from plies or sheets of fiber fabric. The sheets may have a length in spanwise direction of maximum 2 times of the receiver length, particularly of maximum 1.7 times or of maximum 1.4 times. For example, at least one of the sheets of fiber fabric of the load transfer laminate may have about the same length as the receiver length. The sheets of fiber fabric of the load transfer laminate may have different lengths in spanwise direction.

According to embodiments, the first blade segment 50 includes two spar caps 40 and a load transfer laminate 64 according to embodiments described herein for each of the spar caps 40. **In** some embodiments, the load transfer laminates 64 for the spar caps 40 may be provided with the same or similar features, e.g. with respect to the respective spar cap 40 or with respect to the receiver 66. **In** further embodiments, the load transfer laminates as described herein may be provided differently for each of the spar caps 40. According to yet further embodiments, only one load transfer laminate 64 as described herein may be provided for one of the spar caps.

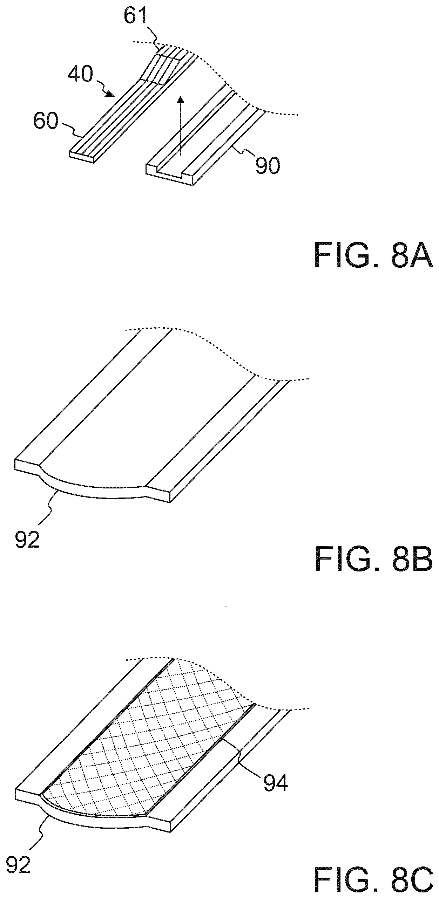

According to embodiments of the present disclosure, a method 100 of producing a first blade segment 50 for a segmented wind turbine rotor blade 10 is provided, particularly for producing a first blade segment 50 according to embodiments described herein. For example, FIG. 7 illustrates a flow diagram of a method 100. **In** some embodiments, the method 100 may include forming (box 110) a spar cap 40. The spar cap 40 may be formed via pultrusion. For example, the spar cap 40 may be formed in a spar cap mold 90, particularly a pultrusion mold. As illustrated in FIG. 8A, the spar cap 40 may be formed to include more than one spar cap layer, e.g., a first spar cap layer 60 and a second spar cap layer 61. The spar cap 40 may include at least a first spanwise region 52 and a second spanwise region 54 according to embodiments described herein.

**In** embodiments, the method 100 includes arranging a component assembly in a blade segment mold 92. For example, FIG.8B illustrates a portion of an empty blade segment mold 92. In embodiments, arranging the component assembly includes arranging (box 120) outer shell fiber material 94 for an outer shell 58 in the blade segment mold 92. The outer shell fiber material 94 may include one or more sheets of fiber fabric, particularly of biaxial fiber fabric. FIG. 8C illustrates for example a sheet of biaxial fiber fabric for the outer shell 58 being arranged in the blade segment mold 92.

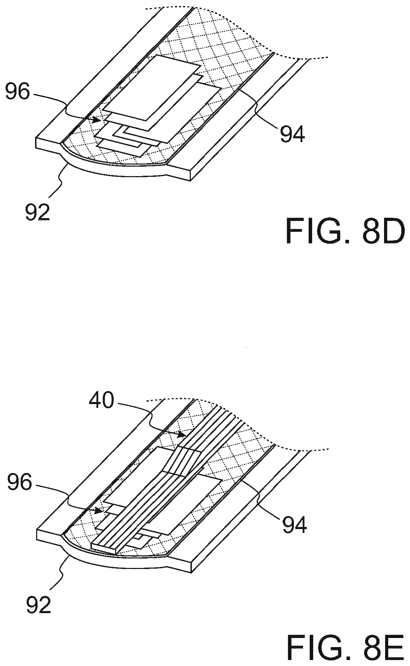

According to embodiments, arranging the component assembly includes arranging (box 130) load transfer laminate material 96, particularly for a load transfer laminate 64 according to embodiments described herein. In particular, the load transfer laminate material may be fiber material as described herein. In some embodiments, the load transfer laminate material 96 may be arranged over the outer shell fiber material 94. In some embodiments, the load transfer laminate material is arranged before arranging the spar cap 40 in the blade segment mold 92. The load transfer laminate material 96 may be arranged in a spanwise region of the blade segment mold 92 corresponding to the second spanwise region 54 of the spar cap 40. For example, FIG. 8D illustrates a plurality of sheets of fiber fabric for the load transfer laminate 64 being arranged in a region corresponding to the second spanwise region 54 of the spar cap 40. In further embodiments, the load transfer laminate material 96 may be arranged after arranging the spar cap 40 in the blade segment mold 92. In particular, the load transfer laminate material may be arranged on top of the spar cap 40 in the second spanwise region 54 of the spar cap 40. In even further embodiments, a portion of the load transfer laminate material may be arranged on the outer shell fiber material 94 and a further portion of the load transfer laminate material may be arranged on top of the spar cap 40 after arranging the spar cap 40 in the blade segment mold 92. In embodiments, the load transfer laminate material 96 is arranged such that less than 80% of fibers of the load transfer laminate material 96, particularly less than 75% of the fibers or more particularly less than 70%, are oriented in a spanwise direction 44. In particular, the load transfer laminate material 96 may be arranged such that the fibers are oriented as in a load transfer laminate 64 described herein.

According to embodiments, arranging the component assembly includes arranging (box 140) the spar cap 40 in the blade segment mold 92, for example over the outer shell fiber material 94. In particular, the spar cap 40 may be arranged over the outer shell fiber material 94 and over the load transfer laminate material 96, e.g. as illustrated in FIG. 8E.

In embodiments, arranging the component assembly further includes arranging (box 150) inner shell fiber material for the inner shell 57 over the spar cap 40.

According to embodiments, the method further includes infusing (box 160) the component assembly with an infusion material after arranging the component assembly in the blade segment mold 92. For example, infusing the component assembly may be performed by a vacuum infusion process. The component assembly, in particular the outer shell fiber material 94, the inner shell fiber material and the load transfer laminate material 96, is infused with infusion material, particularly with a resin. Infusing the component assembly provides an outer shell 58 from the outer shell fiber material 94, a load transfer laminate 64 from the load transfer laminate material 96, and an inner shell 57 from the inner shell fiber material. Infusing the component assembly may further bond the pre-fabricated spar cap 40 with the outer shell fiber material 94, the inner shell fiber material and/or the load transfer laminate material 96. The method 100 may particularly provide a first half of the first blade segment 50.

The method 100 may further include forming a second half of the first blade segment 50. The second half may be formed similarly to the first half. The second half may be formed using a different blade segment mold. In embodiments, the method may include connecting a receiver 66 to the first half and/or to the second half of the first blade segment 50. In particular, the receiver 66 may be connected to the first half in a second spanwise region 54 of the spar cap 40 according to embodiments described herein. The method 100 may further include connecting one or more shear webs 42 to the first half and the second half. The method 100 may further include connecting the first half and the second half to form a first blade segment 50, particularly a first blade segment 50 according to embodiments described herein.

Embodiments of the present disclosure may provide the advantage that a load transfer between blade segment components including a spar cap, a blade shell and/or a receiver of a blade joint can be improved. In particular, a transfer of spanwise and/or torsional loads in a joint region of the segmented rotor blade can be improved. Further, loads and forces transmitted via the blade joint may be distributed by the load transfer laminate. According to embodiments, more space for the receiver may be provided within the aerodynamic shape of the rotor blade. Embodiments may particularly improve a robustness, stability and/or safety of a wind turbine rotor blade.

This written description uses examples to disclose the invention, including the best mode, and also to enable any person skilled in the art to practice the invention, including making and using any devices or systems and performing any incorporated methods. The scope is defined by the appended claims.

## Claims

1. A first blade segment (50) for a segmented wind turbine rotor blade (10), comprising
- a spar cap (40) comprising at least a first spanwise region (52) and a second spanwise region (54);
- a load transfer laminate (64) being arranged in the second spanwise region (54) of the spar cap (40); wherein the load transfer laminate (64) comprises fibers, and wherein less than 80% of the fibers are oriented in a spanwise direction (44) of the first blade segment (50); and
- an inner shell (57) and an outer shell (58), the load transfer laminate (64) being arranged between the spar cap (40) and at least one of: the inner shell (57) and the outer shell (58); wherein the inner shell (57), the outer shell (58) and the load transfer laminate (64) are formed by infusion of fiber material in a blade segment mold (92).

2. The first blade segment (50) of claim 1, wherein the first blade segment (50) comprises a receiver (66) for receiving a connecting member (82) of a second blade segment (80) of the segmented wind turbine rotor blade (10); and wherein the receiver (66) is at least partially arranged in the second spanwise region (54) of the spar cap (40).

3. The first blade segment (50) of claim 2, wherein a chordwise width of the load transfer laminate (64) is larger than a chordwise receiver width of the receiver (66).

4. The first blade segment (50) of any one of the preceding claims, wherein the load transfer laminate (64) has a flapwise thickness, the flapwise thickness being non-uniform in the spanwise direction (44).

5. The first blade segment (50) of claim 4, wherein the load transfer laminate (64) has a maximum flapwise thickness in the second spanwise region (54), and wherein the flapwise thickness tapers from the maximum flapwise thickness in at least one spanwise direction (44).

6. The first blade segment (50) of any one of the preceding claims, wherein the load transfer laminate (64) comprises fabric layers, the fabric layers comprising the fibers of the load transfer laminate (64), and wherein the fabric layers comprise at least one first layer with fibers oriented in one or more first directions, and wherein the fabric layers comprise at least one second layer with fibers oriented in one or more second directions different from the one or more first directions.

7. The first blade segment (50) of claim 6, wherein the fabric layers of the load transfer laminate (64) comprise a plurality of biaxial fabric layers and at least one unidirectional fabric layer.

8. The first blade segment (50) of any one of the preceding claims, wherein the load transfer laminate (64) comprises one or more glass fiber fabric layers and/or one or more carbon fiber fabric layers.

9. The first blade segment (50) of any one of the preceding claims, wherein the second spanwise region (54) of the spar cap (40) comprises a tip-side end of the spar cap (40).

10. The first blade segment (50) of any one of the preceding claims, wherein the spar cap (40) has a first spar cap flapwise thickness in the first spanwise region (52) and a second spar cap flapwise thickness in the second spanwise region (54), and wherein the first spar cap flapwise thickness is larger than the second spar cap flapwise thickness.

11. The first blade segment (50) of any one of the preceding claims, wherein the spar cap (40) is formed via pultrusion.

12. A segmented wind turbine rotor blade (10) comprising the first blade segment (50) of any of the preceding claims.

13. A method (100) of producing a first blade segment (50) for a segmented wind turbine rotor blade (10), comprising:
- arranging a component assembly in a blade segment mold (92), wherein arranging the component assembly comprises:
- arranging outer shell fiber material (94) for an outer shell (58) in the blade segment mold (92);
- arranging a spar cap (40) in the blade segment mold (92), the spar cap (40) comprising at least a first spanwise region (52) and a second spanwise region (54);
- arranging load transfer laminate material (96) in the second spanwise region (54) of the spar cap (40), wherein the load transfer laminate material (96) is arranged such that less than 80% of fibers of the load transfer laminate material (96) are oriented in a spanwise direction (44);
- arranging inner shell fiber material for the inner shell (57) over the spar cap (40); and
- after arranging the component assembly, infusing the component assembly with an infusion material, wherein infusing the component assembly provides an outer shell (58) of the first blade segment (50) from the outer shell fiber material (94), a load transfer laminate (64) of the first blade segment (50) from the load transfer laminate material (96), and an inner shell (57) of the first blade segment (50) from the inner shell fiber material, the load transfer laminate (64) being arranged between the spar cap (40) and at least one of: the inner shell (57) and the outer shell (58).

14. The method (100) of claim 13, further comprising:
- before arranging the spar cap (40), forming the spar cap (40) via pultrusion.

## Patentansprüche

1. Erstes Blattsegment (50) für ein segmentiertes Windturbinenrotorblatt (10), umfassend:
- einen Holmgurt (40), der mindestens einen ersten Spannweitenbereich (52) und einen zweiten Spannweitenbereich (54) aufweist;
- ein Lastübertragungslaminat (64), das in dem zweiten Spannweitenbereich (54) des Holmgurts (40) angeordnet ist; wobei das Lastübertragungslaminat (64) Fasern aufweist, und wobei weniger als 80 % der Fasern in einer Spannweitenrichtung (44) des ersten Blattsegments (50) ausgerichtet sind; und
- eine Innenschale (57) und eine Außenschale (58), wobei das Lastübertragungslaminat (64) zwischen dem Holmgurt (40) und mindestens einem von: der Innenschale (57) und der Außenschale (58) angeordnet ist; wobei die Innenschale (57), die Außenschale (58) und das Lastübertragungslaminat (64) durch Infusion von Fasermaterial in einer Blattsegmentform (92) gebildet sind.

2. Erstes Blattsegment (50) nach Anspruch 1, wobei das erste Blattsegment (50) eine Aufnahme (66) zum Aufnehmen eines Verbindungselements (82) eines zweiten Blattsegments (80) des segmentierten Windturbinenrotorblatts (10) aufweist; und wobei die Aufnahme (66) zumindest teilweise in dem zweiten Spannweitenbereich (54) des Holmgurts (40) angeordnet ist.

3. Erstes Blattsegment (50) nach Anspruch 2, wobei eine Profiltiefenbreite des Lastübertragungslaminats (64) größer ist als eine Profiltiefen-Aufnahmebreite der Aufnahme (66).

4. Erstes Blattsegment (50) nach einem der vorhergehenden Ansprüche, wobei das Lastübertragungslaminat (64) eine Dicke in Schlagrichtung aufweist, wobei die Dicke in Schlagrichtung in der Spannweitenrichtung (44) uneinheitlich ist.

5. Erstes Blattsegment (50) nach Anspruch 4, wobei das Lastübertragungslaminat (64) eine maximale Dicke in Schlagrichtung in dem zweiten Spannweitenbereich (54) aufweist, und wobei sich die Dicke in Schlagrichtung von der maximalen Dicke in Schlagrichtung in mindestens einer Spannweitenrichtung (44) verjüngt.

6. Erstes Blattsegment (50) nach einem der vorhergehenden Ansprüche, wobei das Lastübertragungslaminat (64) Gewebeschichten aufweist, wobei die Gewebeschichten die Fasern des Lastübertragungslaminats (64) aufweisen, und wobei die Gewebeschichten mindestens eine erste Schicht mit Fasern aufweisen, die in einer oder mehreren ersten Richtungen ausgerichtet sind, und wobei die Gewebeschichten mindestens eine zweite Schicht mit Fasern aufweisen, die in einer oder mehreren zweiten Richtungen ausgerichtet sind, die sich von der einen oder den mehreren ersten Richtungen unterscheiden.

7. Erstes Blattsegment (50) nach Anspruch 6, wobei die Gewebeschichten des Lastübertragungslaminats (64) eine Vielzahl von biaxialen Gewebeschichten und mindestens eine unidirektionale Gewebeschicht aufweisen.

8. Erstes Blattsegment (50) nach einem der vorhergehenden Ansprüche, wobei das Lastübertragungslaminat (64) eine oder mehrere Glasfasergewebeschichten und/oder eine oder mehrere Kohlefasergewebeschichten aufweist.

9. Erstes Blattsegment (50) nach einem der vorhergehenden Ansprüche, wobei der zweite Spannweitenbereich (54) des Holmgurts (40) ein blattspitzenseitiges Ende des Holmgurts (40) aufweist.

10. Erstes Blattsegment (50) nach einem der vorhergehenden Ansprüche, wobei der Holmgurt (40) eine erste Holmgurtdicke in Schlagrichtung in dem ersten Spannweitenbereich (52) und eine zweite Holmgurtdicke in Schlagrichtung in dem zweiten Spannweitenbereich (54) aufweist, und wobei die erste Holmgurtdicke in Schlagrichtung größer ist als die zweite Holmgurtdicke in Schlagrichtung.

11. Erstes Blattsegment (50) nach einem der vorhergehenden Ansprüche, wobei der Holmgurt (40) mittels Pultrusion gebildet ist.

12. Segmentiertes Windturbinenrotorblatt (10), umfassend das erste Blattsegment (50) nach einem der vorhergehenden Ansprüche.

13. Verfahren (100) zum Herstellen eines ersten Blattsegments (50) für ein segmentiertes Windturbinenrotorblatt (10), umfasst:
- Anordnen einer Bauteilanordnung in einer Blattsegmentform (92), wobei das Anordnen der Bauteilanordnung umfassend:
- Anordnen von Außenschalenfasermaterial (94) für eine Außenschale (58) in der Blattsegmentform (92);
- Anordnen eines Holmgurts (40) in der Blattsegmentform (92), wobei der Holmgurt (40) mindestens einen ersten Spannweitenbereich (52) und einen zweiten Spannweitenbereich (54) umfasst;
- Anordnen von Lastübertragungslaminatmaterial (96) in dem zweiten Spannweitenbereich (54) des Holmgurts (40), wobei das Lastübertragungslaminatmaterial (96) derart angeordnet wird, dass weniger als 80 % der Fasern des Lastübertragungslaminatmaterials (96) in einer Spannweitenrichtung (44) ausgerichtet sind;
- Anordnen von Innenschalenfasermaterial für die Innenschale (57) über dem Holmgurt (40); und
- nach dem Anordnen der Bauteilanordnung, Infundieren der Bauteilanordnung mit einem Infusionsmaterial, wobei das Infundieren der Bauteilanordnung eine Außenschale (58) des ersten Blattsegments (50) aus dem Außenschalenfasermaterial (94), ein Lastübertragungslaminat (64) des ersten Blattsegments (50) aus dem Lastübertragungslaminatmaterial (96) und eine Innenschale (57) des ersten Blattsegments (50) aus dem Innenschalenfasermaterial bereitstellt, wobei das Lastübertragungslaminat (64) zwischen dem Holmgurt (40) und mindestens einem von: der Innenschale (57) und der Außenschale (58) angeordnet ist.

14. Verfahren (100) nach Anspruch 13, ferner umfassend:
- vor dem Anordnen des Holmgurts (40), Bilden des Holmgurts (40) mittels Pultrusion.

## Revendications

1. Premier segment de pale (50) pour une pale de rotor d'éolienne segmentée (10), comprenant
- une semelle de longeron (40) comprenant au moins une première région dans le sens de l'envergure (52) et une seconde région dans le sens de l'envergure (54) ;
- un stratifié de transfert de charge (64) étant agencé dans la seconde région dans le sens de l'envergure (54) de la semelle de longeron (40) ; dans lequel le stratifié de transfert de charge (64) comprend des fibres, et dans lequel moins de 80 % des fibres sont orientées dans une direction dans le sens de l'envergure (44) du premier segment de pale (50) ; et
- une coque interne (57) et une coque externe (58), le stratifié de transfert de charge (64) étant agencé entre la semelle de longeron (40) et au moins l'une parmi la coque interne (57) et la coque externe (58) ; dans lequel la coque interne (57), la coque externe (58) et le stratifié de transfert de charge (64) sont formés par infusion d'un matériau fibreux dans un moule à segment de pale (92).

2. Premier segment de pale (50) selon la revendication 1, dans lequel le premier segment de pale (50) comprend un récepteur (66) permettant de recevoir un élément de liaison (82) d'un second segment de pale (80) de la pale de rotor d'éolienne segmentée (10) ; et dans lequel le récepteur (66) est au moins partiellement agencé dans la seconde région dans le sens de l'envergure (54) de la semelle de longeron (40).

3. Premier segment de pale (50) selon la revendication 2, dans lequel une largeur dans le sens de la corde du stratifié de transfert de charge (64) est plus grande qu'une largeur de récepteur dans le sens de la corde du récepteur (66).

4. Premier segment de pale (50) selon l'une quelconque des revendications précédentes, dans lequel le stratifié de transfert de charge (64) a une épaisseur dans le sens de battement, l'épaisseur dans le sens de battement n'étant pas uniforme dans le sens de l'envergure (44).

5. Premier segment de pale (50) selon la revendication 4, dans lequel le stratifié de transfert de charge (64) a une épaisseur maximale dans le sens de battement dans la seconde région dans le sens de l'envergure (54), et dans lequel l'épaisseur dans le sens de battement s'amoindrit à partir de l'épaisseur maximale dans le sens de battement dans au moins une direction dans le sens de l'envergure (44).

6. Premier segment de pale (50) selon l'une quelconque des revendications précédentes, dans lequel le stratifié de transfert de charge (64) comprend des couches de tissu, les couches de tissu comprenant les fibres du stratifié de transfert de charge (64), et dans lequel les couches de tissu comprennent au moins une première couche avec des fibres orientées dans une ou plusieurs premières directions, et dans lequel les couches de tissu comprennent au moins une seconde couche avec des fibres orientées dans une ou plusieurs secondes directions différentes de la ou des premières directions.

7. Premier segment de pale (50) selon la revendication 6, dans lequel les couches de tissu du stratifié de transfert de charge (64) comprennent une pluralité de couches de tissu biaxiales et au moins une couche de tissu unidirectionnelle.

8. Premier segment de pale (50) selon l'une quelconque des revendications précédentes, dans lequel le stratifié de transfert de charge (64) comprend une ou plusieurs couches de tissu de fibre de verre et/ou une ou plusieurs couches de tissu de fibre de carbone.

9. Premier segment de pale (50) selon l'une quelconque des revendications précédentes, dans lequel la seconde région dans le sens de l'envergure (54) de la semelle de longeron (40) comprend une extrémité côté pointe de la semelle de longeron (40).

10. Premier segment de pale (50) selon l'une quelconque des revendications précédentes, dans lequel la semelle de longeron (40) a une première épaisseur de semelle de longeron dans le sens de battement dans la première région dans le sens de l'envergure (52) et une seconde épaisseur de semelle de longeron dans le sens de battement dans la seconde région dans le sens de l'envergure (54), et dans lequel la première épaisseur de semelle de longeron dans le sens de battement est plus grande que la seconde épaisseur de semelle de longeron dans le sens de battement.

11. Premier segment de pale (50) selon l'une quelconque des revendications précédentes, dans lequel la semelle de longeron (40) est formée par le biais d'une pultrusion.

12. Pale de rotor d'éolienne segmentée (10) comprenant le premier segment de pale (50) selon l'une quelconque des revendications précédentes.

13. Procédé (100) de production d'un premier segment de pale (50) pour une pale de rotor d'éolienne segmentée (10), comprenant :
- l'agencement d'un ensemble de composants dans un moule à segment de pale (92), dans lequel l'agencement de l'ensemble de composants comprend :
- l'agencement d'un matériau fibreux de coque externe (94) pour une coque externe (58) dans le moule à segment de pale (92) ;
- l'agencement d'une semelle de longeron (40) dans le moule à segment de pale (92), la semelle de longeron (40) comprenant au moins une première région dans le sens de l'envergure (52) et une seconde région dans le sens de l'envergure (54) ;
- l'agencement d'un matériau stratifié de transfert de charge (96) dans la seconde région dans le sens de l'envergure (54) de la semelle de longeron (40), dans lequel le matériau stratifié de transfert de charge (96) est agencé de telle sorte que moins de 80 % des fibres du matériau stratifié de transfert de charge (96) sont orientées dans une direction dans le sens de l'envergure (44) ;
- l'agencement d'un matériau fibreux de coque interne pour la coque interne (57) sur la semelle de longeron (40) ; et
- après l'agencement de l'ensemble composant, l'infusion de l'ensemble composant avec un matériau d'infusion, dans lequel l'infusion de l'ensemble composant fournit une coque externe (58) du premier segment de pale (50) à partir du matériau fibreux de coque externe (94), un stratifié de transfert de charge (64) du premier segment de pale (50) à partir du matériau stratifié de transfert de charge (96), et une coque interne (57) du premier segment de pale (50) à partir du matériau fibreux de coque interne, le stratifié de transfert de charge (64) étant agencé entre la semelle de longeron (40) et au moins l'une parmi la coque interne (57) et la coque externe (58).

14. Procédé (100) selon la revendication 13, comprenant en outre :
- avant l'agencement de la semelle de longeron (40), la formation de la semelle de longeron (40) par le biais d'une pultrusion.
